# EUROPEAN PATENT APPLICATION

(11) **EP 4 503 321 A1**
(43) Date of publication of application: **05.02.2025**
(21) Application number: 23864425.6
(22) Date of filing: 28.06.2023
(51) Int. Cl.: H01M 50/536, H01M 10/0587, H01M 4/13

(54) **ELECTRODE SHEET AND BATTERY**

(30) Priority: 15.09.2022 CN 202222457608 U
(71) Applicant: Zhuhai CosMX Battery Co., Ltd., Zhuhai, Guangdong 519180 (CN)
(72) Inventor: ZHANG, Jian, Zhuhai, Guangdong 519180 (CN); PENG, Chong, Zhuhai, Guangdong 519180 (CN)
(74) Representative: Murgitroyd & Company
(86) International application number: PCT/CN2023/103258
(87) International publication number: WO 2024/055686

(57) **Abstract**

Disclosed are an electrode plate and a battery including the electrode plate. The electrode plate includes a current collector, a tab, a coating layer, and an adhesive paper; a tab welding region and a paste coating region are disposed on the current collector; the tab is disposed in the tab welding region, and the coating layer is disposed in the paste coating region; the electrode plate is divided into a plurality of planar regions and curved surface regions that are alternately disposed, the curved surface region is located in a winding bending portion, and the tab welding region is located in the planar region; the adhesive paper covers the tab welding region, partially covers a planar region in which the tab welding region is located, crosses over an adjacent curved surface region on one side, and partially covers an adjacent planar region; and a projection of the adhesive paper on the adjacent planar region has a dimension L1 in a length direction of the electrode plate, and 0 < L1 ≤ 10 mm. The electrode plate in the present disclosure can fully solve a problem of poor flatness near a tab, and can effectively solve a lithium deposition problem of a lithium-ion battery caused by the poor flatness near the tab.

## Description

### TECHNICAL FIELD

The present disclosure relates to the field of batteries, and specifically relates to an electrode plate and a battery including the electrode plate.

### BACKGROUND

Lithium-ion batteries are currently widely used in fields such as consumer electronics, electric vehicles, and energy storage. Lithium-ion batteries used in consumer electronics products represented by mobile phones are mainly pouch lithium-ion batteries. During a preparation process of a battery, a positive tab and a negative tab are welded respectively on tab welding regions on a positive electrode current collector and a negative electrode current collector as current-conducting devices. In addition, in order to prevent tab burrs from piercing a separator so as not to cause a short circuit between a positive electrode and a negative electrode, an adhesive paper is applied on the tabs for protection. The positive electrode, the separator, and the negative electrode are then wound into a jelly roll. Especially when a width of the battery is narrow (generally ranging from 25 mm to 35 mm), the tab welding region is close to a winding arc region, so that the adhesive paper is located on the winding arc region. This may easily cause the adhesive paper to fold, resulting in poor flatness near the tabs, and further leading to problems of a poor battery interface and lithium deposition.

Therefore, there is a need to find a method to improve a problem of poor battery flatness.

### SUMMARY

The objective of the present disclosure is to overcome problems of a poor interface and lithium deposition caused by poor flatness near a tab in the prior art, by providing an electrode plate and a battery including the electrode plate. The electrode plate in the present disclosure can fully solve a problem of poor flatness near a tab, and can effectively solve a lithium deposition problem of a lithium-ion battery caused by the poor flatness near the tab.

A first aspect of the present disclosure provides an electrode plate. The electrode plate includes a current collector, a tab, a coating layer, and an adhesive paper; a tab welding region and a paste coating region are disposed on the current collector; the tab is disposed in the tab welding region, and the coating layer is disposed in the paste coating region; the electrode plate is divided into a plurality of planar regions and curved surface regions that are alternately disposed, the curved surface region is located in a winding bending portion, and the tab welding region is located in the planar region; the adhesive paper covers the tab welding region, partially covers a planar region in which the tab welding region is located, crosses over an adjacent curved surface region on one side, and partially covers an adjacent planar region; and a projection of the adhesive paper on the adjacent planar region has a dimension L1 in a length direction of the electrode plate, and 0 < L1 ≤ 10 mm.

In an example, 0.1 mm ≤ L1 ≤ 8 mm.

In an example, 0.3 mm ≤ L1 ≤ 5 mm.

In an example, the tab welding region is disposed at a region that does not belong to two ends of the current collector in a length direction.

In an example, the coating layer includes at least a first coating layer and a second coating layer stacked on each other, the coating layer has a thickness difference region at an edge of the adjacent tab welding region, a dimension of the thickness difference region in the length direction of the electrode plate is L2, and L2 ≤ 7 mm.

In an example, the coating layer includes a first coating layer, a second coating layer, and a third coating layer stacked on each other, the coating layer has a thickness difference region at an edge of the adjacent tab welding region, a dimension of the thickness difference region in the length direction of the electrode plate is L2, and L2 ≤ 7 mm.

In an example, L2 ≤ 5 mm.

In an example, the adhesive paper covers the coating layer adjacent to the tab welding region.

In an example, a dimension of the tab welding region in a width direction of the current collector accounts for 10% to 50% of a width of the current collector.

In an example, a dimension of the tab welding region in a width direction of the current collector accounts for 15% to 30% of a width of the current collector.

In an example, a dimension of the adhesive paper in a width direction of the current collector is less than a width of the current collector.

In an example, a dimension of the adhesive paper in a width direction of the current collector is 1 mm to 10 mm greater than a dimension of the tab welding region in the width direction of the current collector.

In an example, a dimension of the adhesive paper in a width direction of the current collector is 2 mm to 5 mm greater than a dimension of the tab welding region in the width direction of the current collector.

In an example, a thickness of the adhesive paper ranges from 4 µm to 20 µm.

In an example, a thickness of the adhesive paper ranges from 6 µm to 12 µm.

In an example, the tab welding region is a foil uncoating region.

A second aspect of the present disclosure provides a battery, and the battery includes the electrode plate according to the first aspect of the present disclosure.

In an example, the electrode plate is a positive electrode plate and/or a negative electrode plate.

In an example, the battery further includes a separator and an electrolyte solution.

Based on the foregoing technical solutions, the present disclosure has at least the following advantages over the conventional technology.
(1) A position of an adhesive paper applied to the electrode plate of the present disclosure crosses over a curved surface region of a winding bending portion, thereby reducing occurrence of the adhesive paper folding when the electrode plate is wound and improving flatness near a tab.
(2) A size of the adhesive paper applied to the electrode plate of the present disclosure is moderate, which can completely cover a tab welding region and reduce adverse effects on electrical performance.
(3) The electrode plate in the present disclosure can effectively ensure that thicknesses of coating layers near the tab welding region are consistent, thereby improving flatness near the tab.

An endpoint and any value of the ranges disclosed herein are not limited to the exact ranges or values, and these ranges or values shall be understood to include values close to these ranges or values. For a numerical range, one or more new numerical ranges may be obtained in combination with each other between endpoint values of respective ranges, between endpoint values of respective ranges and individual point values, and between individual point values, and these numerical range should be considered as specifically disclosed herein.

### BRIEF DESCRIPTION OF THE DRAWINGS

FIG. 1 is a schematic diagram of adhesive paper application according to a specific implementation of the present disclosure.
FIG. 2 is a schematic diagram of a thickness difference region of coating layers according to a specific implementation of the present disclosure.

### Reference numerals:

- 1:: current collector;
- 2:: electrode plate; 21: planar region; and 22: curved surface region;
- 3:: tab welding region;
- 4:: tab;
- 5:: adhesive paper; and
- 61:: first coating layer; 62: second coating layer; and 63: third coating layer.

### DETAILED DESCRIPTION OF THE EMBODIMENTS

Specific implementations of the present disclosure are described below in detail. It should be understood that the specific implementations described herein are merely used for the purposes of illustrating and explaining the present disclosure, rather than limiting the present disclosure.

According to an electrode plate of the specific embodiment of the present disclosure, the electrode plate is exemplarily described below with reference to the accompanying drawings.

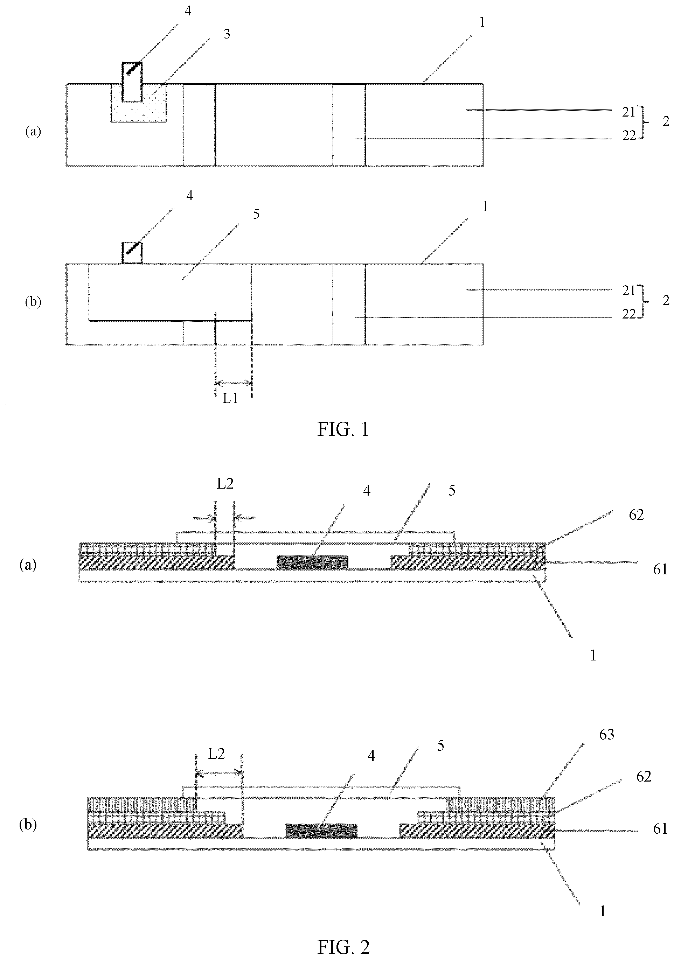

A first aspect of the present disclosure provides an electrode plate. As shown in FIG. 1, in a specific implementation of the present disclosure, the electrode plate 2 includes a current collector 1, a tab 4, a coating layer, and an adhesive paper 5. FIG. 1(a) is a schematic diagram of an electrode plate without adhesive paper application according to a specific implementation of the present disclosure. A tab welding region 3 and a paste coating region are disposed on the current collector 1, the paste coating region is a region on the current collector 1 from which the tab welding region 3 is removed, that is, the tab welding region 3 is a foil uncoating region, the tab 4 is disposed in the tab welding region 3, and the coating layer is disposed in the paste coating region.

In the present disclosure, the electrode plate and the separator are assembled by winding to form a battery, and the electrode plate forms a planar region and a curved surface region during the winding process, and the curved surface region is located at a winding bending portion. FIG. 1(b) is a schematic diagram of an electrode plate with adhesive paper application according to a specific implementation of the present disclosure. The electrode plate 2 is divided into planar regions 21 and curved surface regions 22 located in the winding bending portion. The planar regions 21 and the curved surface regions 22 are alternately distributed in sequence. The tab welding region 3 is located in the planar region 21; the adhesive paper 5 covers the tab welding region, partially covers a planar region 21 in which the tab welding region is located, crosses over an adjacent curved surface region 22 on one side, and partially covers an adjacent planar region 21; and a projection of the adhesive paper 5 on the adjacent planar region 21 has a dimension L 1 in a length direction of the electrode plate, and 0 < L1 ≤ 10 mm, for example, L1 is equal to 0.01 mm, 0.02 mm, 0.03 mm, 0.04 mm, 0.05 mm, 0.06 mm, 0.07 mm, 0.08 mm, 0.09 mm, 0.1 mm, 0.2 mm, 0.3 mm, 0.4 mm, 0.5 mm, 0.6 mm, 0.7 mm, 0.8 mm, 0.9 mm, 1 mm, 2 mm, 3 mm, 4 mm, 5 mm, 6 mm, 7 mm, 8 mm, 9 mm, or 10 mm.

In the present disclosure, the term "length direction" has a conventional meaning in the art. The "length direction" of the electrode plate is a direction of a long side of the electrode plate.

It may be understood that a smaller area of the electrode plate covered by the adhesive paper leads to a larger operation difficulty, and makes it more likely that incomplete coverage occurs that may cause a short circuit between a positive electrode and a negative electrode, thereby reducing safety performance of the battery. In contrast, a larger area of the electrode plate covered by the adhesive paper leads to a smaller operation difficulty, and makes it less likely that incomplete coverage occurs. However, as the area of the electrode plate covered by the adhesive paper increases, energy density of the battery also decreases. Therefore, it is required to minimize reduction in energy density caused by an excessive adhesive paper while ensuring safety performance of the battery.

In an example, 0.1 mm ≤ L1 ≤ 8 mm.

In an example, 0.3 mm ≤ L1 ≤ 5 mm.

In an example, the tab welding region is disposed at a region that does not belong to two ends of the current collector in a length direction. The tab welding region is disposed at a region that does not belong to two ends of the current collector in a length direction, that is, the tab is located in a middle region in the length direction of the current collector. In this case, the electrode plate is a central tabprocess structure (CTP structure).

The inventors of the present disclosure find that when the electrode plate includes two or more coating layers, there is misalignment of the coating layers near the tab welding region, resulting in a difference between a thickness near the tab welding region and a thickness at another location of the electrode plate, further deteriorating flatness near the tab, and causing lithium deposition. The thickness difference region of the coating layers near the tab welding region is controlled, so that the flatness near the tab can be significantly improved, and the problem of lithium deposition in the battery can be improved.

In a specific implementation, as shown in FIG. 2(a), the coating layer includes a first coating layer 61 and a second coating layer 62 stacked on each other, where the adhesive paper 5 covers the first coating layer 61 and the second coating layer 62 near the tab welding region, the coating layer has a thickness difference region at an edge of the adjacent tab welding region, a dimension of the thickness difference region in the length direction of the electrode plate is L2, and L2 ≤ 7 mm, for example, 0 mm, 1 mm, 2 mm, 3 mm, 4 mm, 5 mm, 6 mm, or 7 mm.

In another specific implementation, L2 ≤ 5 mm.

In another specific implementation, as shown in FIG. 2(b), the coating layer includes a first coating layer 61, a second coating layer 62, and a third coating layer 63 stacked on each other, where the adhesive paper 5 covers the first coating layer 61, the second coating layer 62, and the third coating layer 63 near the tab welding region, the coating layer has a thickness difference region at an edge of the adjacent tab welding region, a dimension of the thickness difference region in the length direction of the electrode plate is L2, and L2 ≤ 7 mm, for example, 0 mm, 1 mm, 2 mm, 3 mm, 4 mm, 5 mm, 6 mm, or 7 mm.

In an example, the adhesive paper covers the coating layer adjacent to the tab welding region.

A dimension of the tab welding region in a width direction of the current collector may account for 10% to 50% of a width of the current collector, for example, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, or 50%.

In an example, a dimension of the tab welding region in a width direction of the current collector accounts for 15% to 30% of a width of the current collector.

The adhesive paper can not only prevent tab burrs from piercing a separator so as not to cause a short circuit between a positive electrode and a negative electrode, but also can cover the tab welding region to prevent a short circuit caused by contact between the positive electrode and the negative electrode. It may be understood that both the dimension of the adhesive paper in the length direction of the current collector and the dimension of the adhesive paper in the width direction of the current collector can affect safety performance and electrochemical performance of the battery. When the dimension of the adhesive paper in the width direction of the current collector is small, the adhesive paper may not be able to completely cover the tab welding region in the width direction of the current collector during adhesive paper application, which may cause a short circuit between the positive electrode and the negative electrode. When the dimension of the adhesive paper in the width direction of the current collector is large, energy density of the battery may be affected, and the electrochemical performance of the battery is adversely affected. Therefore, it is required to minimize reduction in energy density caused by an excessive adhesive paper while ensuring safety performance of the battery.

In an example, a dimension of the adhesive paper in a width direction of the current collector is less than a width of the current collector.

A dimension of the adhesive paper in a width direction of the current collector may be 1 mm to 10 mm, for example, 1 mm, 2 mm, 3 mm, 4 mm, 5 mm, 6 mm, 7 mm, 8 mm, 9 mm, or 10 mm, greater than a dimension of the tab welding region in the width direction of the current collector.

In an example, a dimension of the adhesive paper in a width direction of the current collector is 2 mm to 5 mm greater than a dimension of the tab welding region in the width direction of the current collector.

The adhesive paper may be a conventional adhesive paper in the art, for example, acrylic adhesive paper or rubber adhesive paper.

A thickness of the adhesive paper may range from 4 µm to 20 µm, for example, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, or 20 µm.

In an example, a thickness of the adhesive paper ranges from 6 µm to 12 µm.

A second aspect of the present disclosure provides a battery, and the battery includes the electrode plate according to the first aspect of the present disclosure.

In an example, the electrode plate is a positive electrode plate and/or a negative electrode plate.

Except for the electrode plate, all materials and a preparation method of the battery may be performed in a manner in the art. In this way, flatness can be improved.

The battery further includes a separator and an electrolyte solution.

For example, the separator includes a base material layer and a separator coating layer applied on both sides of the base material layer; the base material layer is a polyethylene film, a polypropylene film, a mixed film of polyethylene and polypropylene (where a mass ratio of polyethylene to polypropylene is 2:1), or a polyimide film; the separator coating layer is a ceramic layer and/or an adhesive layer; the ceramic layer includes aluminum oxide or boehmite; and the adhesive layer includes polyvinylidene fluoride.

For example, the electrolyte solution is a combination of ethylene carbonate and dimethyl carbonate (a mass ratio of ethylene carbonate to dimethyl carbonate is 2:3) and 0.8 mol/L lithium hexafluorophosphate.

The following describes the present disclosure in detail by using embodiments. The embodiments described in the present disclosure are merely some, but not all of the embodiments of the present disclosure. All other embodiments obtained by a person of ordinary skill in the art based on the embodiments of the present disclosure without creative efforts fall within the protection scope of the present disclosure.

In the following examples, unless otherwise specified, all materials used were commercially available analytical reagents.

The following examples were used to describe a battery in the present disclosure.

### Examples

Preparation of the battery in the present disclosure included at least the following steps.
(1) Preparation of a positive electrode slurry: Lithium iron phosphate, carbon black, carbon nanotubes, and polyvinylidene fluoride were mixed evenly at a mass ratio of 96:1:1:2, and N-methylpyrrolidone was added. A resulting mixture was stirred evenly, to form a positive electrode slurry 1 with a solid content of 50%. Lithium cobalt oxide, carbon black, carbon nanotubes, and polyvinylidene fluoride were mixed evenly at a mass ratio of 96:1:1:2, and N-methylpyrrolidone was added. A resulting mixture was stirred evenly, to form a positive electrode slurry 2 with a solid content of 70%.
(2) Preparation of a negative electrode slurry: Artificial graphite, carbon black, styrenebutadiene rubber, and sodium carboxymethyl cellulose were mixed evenly at a mass ratio of 96:1:1.5:1.5, and deionized water was added. A resulting mixture was stirred evenly, to form a negative electrode slurry with a solid content of 40%.
(3) Preparation of a positive electrode plate: The positive electrode slurry 1 formed in Step (1) was applied on an aluminum foil by a gravure coating process, and the aluminum foil was baked to form a first coating layer. Then, the positive electrode slurry 2 formed in Step (1) was applied on the first coating layer by an extrusion coating process, and the aluminum foil was baked to form a second coating layer, to obtain a positive electrode plate including the first coating layer and the second coating layer.
(4) Preparation of a negative electrode plate: The negative electrode slurry formed in Step (2) was applied on a copper foil by the extrusion coating process, and the copper foil was baked to obtain a negative electrode plate.
(5) Rolling and slitting: A roller press was used to roll the positive electrode plate and the negative electrode plate obtained in Step (3) and Step (4) to designed thicknesses, and then a slitting machine was used to slit the positive electrode plate and the negative electrode plate to designed widths, where the designed thickness of the positive electrode plate was 105 mm, the designed width of the positive electrode plate was 76 mm, the designed thickness of the negative electrode plate was 110 mm, and the designed width of the negative electrode plate was 78 mm.
(6) Coating layers of corresponding tab welding regions on the positive electrode plate and the negative electrode plate were separately removed to obtain the tab welding regions (that is, the tab welding regions were foil uncoating regions, and tabs were disposed on the foil uncoating regions), and the tabs were welded and adhesive papers were applied on the tab welding region of the positive electrode plate and the tab welding region of the negative electrode plate respectively, where the coating layer of the corresponding tab welding region of the positive electrode plate was removed by scraper cleaning, and the coating layer of the corresponding tab welding region of the negative electrode plate was removed by laser cleaning.
(7) The positive electrode plate, the separator (where the separator included a base material layer, a ceramic layer disposed on outer surfaces of both sides of the base material layer, and an adhesive layer disposed on an outer surface of the ceramic layer, the base material layer was polyethylene, the ceramic layer was boehmite, and the adhesive layer was polyvinylidene fluoride), and the negative electrode plate were stacked in sequence, and then wound to form a jelly roll, and jelly roll termination adhesive was applied for fixing.
(8) An aluminum-plastic film was stamped by using a stamping die, the jelly roll was packaged with the stamped aluminum-plastic film to obtain a battery cell, the battery cell was baked until a water content was qualified, and then an electrolyte solution was injected [a combination of ethylene carbonate and dimethyl carbonate (a mass ratio of ethylene carbonate to dimethyl carbonate is 2:3) and 0.8 mol/L lithium hexafluorophosphate]. Then, a lithium-ion battery formation device was used to charge and discharge the battery cell to harden the battery cell, and then sort a capacity of the battery cell.
(9) Secondary sealing was performed on the battery cell, edge folding was performed, then an OCV test was performed to obtain K values of the battery, and products with qualified K values were selected.

Differences between Example 1 to Example 9 in the present disclosure and comparative examples lied in a size and an application location of an adhesive paper, and a dimension of a thickness difference region of a coating layer in a length direction of an electrode plate. Details were shown in Table 1, where "positive electrode plate L2" referred to a dimension of a thickness difference region of a coating layer of a positive electrode plate in a length direction of the electrode plate, and the rest of the data referred to sizes and application locations of adhesive papers on the positive electrode plate and the negative electrode plate.

A difference between Example 10 and Example 1 in the present disclosure lied in that in Example 10, three coating layers were disposed outside a current collector of a positive electrode plate. Details are as follows.

### Example 10

(1) Preparation of a positive electrode slurry: Lithium iron phosphate, carbon black, carbon nanotubes, and polyvinylidene fluoride were mixed evenly at a mass ratio of 96:1:1:2, and N-methylpyrrolidone was added. A resulting mixture was stirred evenly, to form a positive electrode slurry 1 with a solid content of 50%. Lithium cobalt oxide (with a doping amount of aluminum being 4000 ppm), carbon black, carbon nanotubes, and polyvinylidene fluoride were mixed evenly at a mass ratio of 96:1:1:2, and N-methylpyrrolidone was added. A resulting mixture was stirred evenly, to form a positive electrode slurry 2 with a solid content of 70%. Lithium cobalt oxide (with a doping amount of aluminum being 5000 ppm), carbon black, carbon nanotubes, and polyvinylidene fluoride were mixed evenly at a mass ratio of 96:1:1:2, and N-methylpyrrolidone was added. A resulting mixture was stirred evenly, to form a positive electrode slurry 3 with a solid content of 70%.
(3) Preparation of a positive electrode plate: The positive electrode slurry 1 formed in Step (1) was applied on an aluminum foil by a gravure coating process, and the aluminum foil was baked to form a first coating layer. Then, the positive electrode slurry 2 and the positive electrode slurry 3 formed in Step (1) was applied on the first coating layer together by a dual-chamber extrusion coating machine, and the aluminum foil was baked, to obtain a positive electrode plate including the first coating layer, the second coating layer, and the third coating layer.

**Table 1**

| | L1/mm | Edge of an adhesive paper falling on a curved surface region | Dimension of the adhesive paper that is larger than a welding region in a width direction/mm | Thickness of the adhesive paper/mm | Proportion of a width of the tab welding region to a width of a current collector | Positive electrode plate L2/mm |
|---|---|---|---|---|---|---|
| Example 1 | 2 | No | 3.5 | 9 | 22% | 0 |
| Example 2 | 0.3 | No | 2 | 6 | 15% | 2.5 |
| Example 3 | 5 | No | 5 | 12 | 30% | 5 |
| Example 4 | 7 | No | 3.5 | 9 | 22% | 0 |
| Example 5 | 9 | No | 3.5 | 9 | 22% | 0 |
| Example 6 | 2 | No | 3.5 | 9 | 22% | 6 |
| Example 7 | 2 | No | 8 | 9 | 22% | 0 |
| Example 8 | 2 | No | 3.5 | 9 | 45% | 0 |
| Example 9 | 2 | No | 3.5 | 18 | 22% | 0 |
| Example 10 | 2 | No | 3.5 | 9 | 22% | 0 |
| Comparative Example 1 | / | Yes | 3.5 | 9 | 22% | 0 |
| Comparative Example 2 | 12 | No | 3.5 | 9 | 22% | 0 |

### Test example

### (1) "Folding" test

A wound jelly roll was disassembled, and a positive electrode plate, a negative electrode plate, and a separator were separated, and a folding status of a protective adhesive paper in a welding region of the electrode plate was observed.

### (2) "Lithium deposition" test

In a 25 ± 3°C environment, a battery was charged to 4.45 V at 1.5C, charged at a constant voltage to a cut-off current of 0.05C, and then discharged to 3.0 V at a rate of 0.5C. Charge and discharge steps were repeated 20 times, and then the battery was charged to 4.45 V at 1.5C, and charged at a constant voltage to a cut-off current of 0.05C. Then, in a dry environment with a dew point below -30°C, the battery was dissected, and a lithium deposition status of the battery was determined by observing whether there was lithium deposition on a negative electrode plate and a separator.

### (3) Electrochemical test

1.5C/0.5C charge-discharge cycle: The battery was charged to 4.45 V at 1.5C, charged at a constant voltage to 0.05C, and then discharged to 3.0 V at 0.5C. A capacity of each discharge was recorded. An initial discharge capacity was denoted as C₀, a discharge capacity after 500 cycles was C₅₀₀, and then, a cycling capacity retention rate F = C₅₀₀/C₀.

The test results were recorded in Table 2.

**Table 2**

| | Adhesive paper at a tab being folded | Lithium deposition occurring at the tab | Capacity retention rate after 500 cycles at room temperature |
|---|---|---|---|
| Example 1 | No | No | 92% |
| Example 2 | No | No | 92% |
| Example 3 | No | No | 92% |
| Example 4 | No | No | 90% |
| Example 5 | No | No | 89% |
| Example 6 | No | No | 86% |
| Example 7 | No | No | 87% |
| Example 8 | No | No | 86% |
| Example 9 | No | No | 85% |
| Example 10 | No | No | 91% |
| Comparative Example 1 | Yes | Yes | 75% |
| Comparative Example 2 | No | Yes | 78% |

It may be learned from Table 2 that, compared with the comparative examples, the battery in the present disclosure does not have adhesive paper folding at the tab, there is no lithium deposition phenomenon at the tab, and the capacity retention rate after 500 cycles at room temperature is significantly improved. The battery prepared with the electrode plate in the present disclosure can improve lithium deposition caused by poor flatness near the tab while reducing adverse effects on electrical performance.

The foregoing describes in detail a preferred implementation of the present disclosure. However, the present disclosure is not limited thereto. Within the scope of the technical concepts of the present disclosure, various simple variations may be implemented to the technical solutions of the present disclosure, including combinations of technical features in any other suitable manner. These simple variations and combinations shall also be considered as the disclosure of the present disclosure and shall fall within the protection scope of the present disclosure.

## Claims

1. An electrode plate, comprising a current collector, a tab, a coating layer, and an adhesive paper; a tab welding region and a paste coating region are disposed on the current collector; the tab is disposed in the tab welding region, and the coating layer is disposed in the paste coating region; the electrode plate is divided into a plurality of planar regions and curved surface regions that are alternately disposed, the curved surface region is located in a winding bending portion, and the tab welding region is located in the planar region; the adhesive paper covers the tab welding region, partially covers a planar region in which the tab welding region is located, crosses over an adjacent curved surface region on one side, and partially covers an adjacent planar region; and a projection of the adhesive paper on the adjacent planar region has a dimension L1 in a length direction of the electrode plate, and 0 < L1 ≤ 10 mm.

2. The electrode plate according to claim 1, wherein 0.1 mm ≤ L1 ≤ 8 mm;
preferably 0.3 mm ≤ L1 ≤ 5 mm.

3. The electrode plate according to claim 1 or 2, wherein the tab welding region is disposed at a region that does not belong to two ends of the current collector in a length direction.

4. The electrode plate according to any one of claims 1 to 3, wherein the coating layer comprises at least a first coating layer and a second coating layer stacked on each other, the coating layer has a thickness difference region at an edge of the adjacent tab welding region, a dimension of the thickness difference region in the length direction of the electrode plate is L2, and L2 ≤ 7 mm.

5. The electrode plate according to any one of claims 1 to 4, wherein the coating layer comprises a first coating layer, a second coating layer, and a third coating layer stacked on each other, the coating layer has a thickness difference region at an edge of the adjacent tab welding region, a dimension of the thickness difference region in the length direction of the electrode plate is L2, and L2 ≤ 7 mm.

6. The electrode plate according to claim 4 or 5, wherein L2 ≤ 5 mm.

7. The electrode plate according to any one of claims 1 to 6, wherein the adhesive paper covers the coating layer adjacent to the tab welding region.

8. The electrode plate according to any one of claims 1 to 7, wherein a dimension of the tab welding region in a width direction of the current collector accounts for 10% to 50%;
preferably the dimension of the tab welding region in the width direction of the current collector accounts for 15% to 30%.

9. The electrode plate according to any one of claims 1 to 8, wherein a dimension of the adhesive paper in a width direction of the current collector is less than a width of the current collector.

10. The electrode plate according to any one of claims 1 to 9, wherein a dimension of the adhesive paper in a width direction of the current collector is 1 mm to 10 mm greater than a dimension of the tab welding region in the width direction of the current collector;
preferably the dimension of the adhesive paper in the width direction of the current collector is 2 mm to 5 mm greater than the dimension of the tab welding region in the width direction of the current collector.

11. The electrode plate according to any one of claims 1 to 10, wherein a thickness of the adhesive paper ranges from 4 µm to 20 µm, preferably 6 µm to 12 µm.

12. The electrode plate according to any one of claims 1 to 11, wherein the tab welding region is a foil uncoating region.

13. A battery, comprising the electrode plate according to any one of claims 1 to 12.

14. The battery according to claim 13, wherein the electrode plate is a positive electrode plate and/or a negative electrode plate.

15. The battery according to claim 13 or 14, wherein the battery further comprises a separator and an electrolyte solution.
